# EUROPEAN PATENT SPECIFICATION

(11) **EP 0 487 151 B1**
(45) Date of publication and mention of the grant of the patent: **13.09.1995**
(21) Application number: 91202983.2
(22) Date of filing: 18.11.1991
(51) Int. Cl.: G02B 6/24, G02B 6/26, C03B 37/15

(54) **Low-reflection termination of an optical fibre**
Relflexionsarmer Abschluss einer optischen Faser
Terminaison à faible réflexion d'une fibre optique

(30) Priority: 21.11.1990 NL 9002537
(43) Date of publication of application: 27.05.1992
(73) Proprietor: Koninklijke PTT Nederland N.V., 2509 CH Den Haag (NL)
(72) Inventor: Kraag, Johan Adriaan, NL-2723 TS Zoetermeer (NL); Segers, Gerrit, NL-2182 CD Hillegom (NL)

(56) References cited:
- US-A- 4 557 557
- PATENT ABSTRACTS OF JAPAN vol. 6, no. 92 (P-119)(970) 29 May 1982 ; & JP-A-57 027 211
- PATENT ABSTRACTS OF JAPAN vol. 10, no. 300 (P-506)(2356) 14 October 1986 ; & JP-A-61 117 508
- APPLIED OPTICS, vol. 20, no. 9, May 1981, New York, US, pp. 1640-1644 ; M.D. DRAKE : "Low reflectance terminations and connections for duplex fiber-optic telecommunication links"
- LASER UND OPTOELEKTRONIK, vol. 19, no. 3, September 1987, Stuttgart, DE, pp. 283-287 ; W. JANIEC et al. : "Die optische Kernzentrierung bei Lichtwellenleiter-Steckverbindern in Multi- und speziell in Monomode-Übertragungssteckern"

## Description

### A. BACKGROUND OF THE INVENTION

The invention is in the field of optical fibre techniques. It relates to a method for producing a deformation which can be used as low-reflection termination component in a section of optical fibre, and a termination component comprising such a deformation.

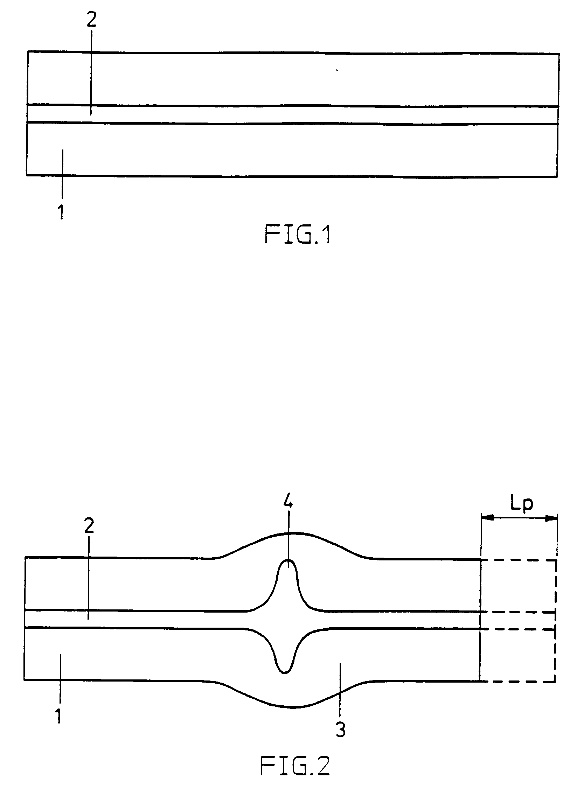

In finishing off optical fibres in optical networks, there may arise at various points free fibre ends which continue no further. This is, inter alia, the case when fibre-fibre couplings such as directional couplings and passive power splitters are used. Just as in electrical networks, such ends have to be terminated in such a way that as few signal reflections as possible occur. In addition, the light signal still emerging at such an end has to be so diffuse that it cannot be used for tapping purposes. Since the number of terminations needed is large, the termination must be as simple as possible and not very labour-intensive. Various types of terminations have been investigated for reflection and transmission characteristics in reference [1], and more particularly in Part III and Figure 2 thereof. Thus, it is known from this publication to terminate a fibre end with low-reflection either by cutting its end off at an angle or simply breaking it off, which produces an irregular fracture surface. A disadvantage mentioned is that, although such a termination can be produced rapidly and simply in this way, neither method can be reliably repeated. Another method of termination is that of the single and the double 'taper' using a fibre-splicing apparatus having an electrical flamearc. In this process, a fibre is heated at the desired place under a slight axial tensile stress to above the glass softening point and drawn until the diameter has been reduced to a certain value in the case of the double 'taper' or until the fibre breaks in the case of the single 'taper', and then cooled. This certainly produces a satisfactorily reproducible termination whose reflection characteristics are, however, substantially less. A bulbous termination obtained by melting a fibre end and then cooling it to a drop shape having a diameter of 1.5-2.0 times the fibre diameter was found to have the lowest reflection and be satisfactorily reproducible. However, since such a bulbous shape acts as a lens, this type of termination does not meet the requirement imposed above relating to the diffusivity of the emerging light signal. Of course, such an end can be finished off still further, for example by immersing the end in a liquid having a refractive index which is equal to that of the optical fibre. It is also possible to provide the end with, for example, a drop of glue or something similar having a refractive index equal to that of the fibre. But such additions increase the labour intensiveness of the termination.

As can be derived from the parameters, mentioned in reference [1], this document specifically deals with multimode fibres. However, nowadays monomode fibres are available in large quantities and multimode fibres are superseded by monomode fibres in many applications. The methods applied when using multimode fibres can not be used for monomode fibres without paying attention to the parameters for those methods.

Reference [2] discloses a mode scrambler or mode mixer for a multimode optical fibre which is produced by a local expansion of the core diameter of the fibre. Said expansion is produced by exerting compressive forces from two sides of the fibre in the direction of the point of heating during local uniform heating of the fibre. However, to apply this method to an end section of a monomode optical fibre to result in a satisfactorily reproducible termination component and how to do this, is not disclosed in reference [2].

### B. SUMMARY OF THE INVENTION

The invention provides a method for producing a deformation having a very high reflection and transmission attenuation in a section of optical fibre, with which method a termination component for an end section can be produced in a simple manner and with very satisfactory reproducibility. For this purpose it has the characteristic according to Claim 1. It is based on the surprising discovery that, if a section of monomode fibre is locally heated above its softening point and the fibre is then pushed together in the axial direction over a suitably chosen length, this treatment results in a local deformation as a result of which the section of fibre has characteristics which are excellent for acting as an optical "termination impedance" for fibre ends in optical networks.

From reference [3] it is known per se to produce an attenuation component in an optical fibre connection by pushing fibre ends to be spliced together somewhat during the splicing, which produces, at the point of the fibre splice, a thickening of the fibre in which the core is enlarged. This attenuation component is used to reduce the power of a light signal propagating in the fibre connection to a desired level.

Reference [4] discloses a fibre splicing method in which fibre ends to be spliced are first pushed together to some extent during the splicing and then stretched, which produces a splice with a low loss attenuation without accurate alignment of the cores of the fibre ends.

### C. REFERENCES

[1] M.D. Drake: "Low reflectance terminations and connections for duplex fiber-optic telecommunications links", Applied Optics/Vol. 20, No. 9/ 1 May 1981;
[2] Patent Abstracts of Japan, vol. 6, no. 92 (P-119) (970), 29 May 1982, & JP-A-5727211 (FUJITSU K.K.);
[3] US-A-4,557,557 (GLEASON et al.);
[4] Patent Abstracts of Japan, vol. 10, no. 300 (P-506) (2356), 14 October 1986, & JP-A-61117508 (NIPPON TELEGR).

### D. EXEMPLARY EMBODIMENT

Figure 1 shows a section of optical fibre consisting of the cladding material 1 and the core material 2 which has been stripped of its protective coating (for example by burning off).

Figure 2 shows the same section of optical fibre after a deformation 3 has been produced in it, the section of fibre having undergone a shortening in its longitudinal direction over a certain compression length Lₚ. To produce said deformation, the section of fibre has been heated at this point above the softening point of the fibre material. The fibre sections on either side of the heated point have then been pushed towards each other, with the application of an axially directed pressure, over said compression length Lₚ, after which the whole has been cooled. In practice, this is done on a standard monomode glass fibre having a core diameter of approximately 8.5 micrometers and a cladding diameter of 125 micrometers. At the same time, measurements have shown that, if a Lₚ of between 175 µm and 225 µm is chosen for such a fibre, it is the case for signals in both directions that no measurable reflection or transmission occurs. In addition, it was found that the light emerging at the deformation is diffusely scattered all round. With a compression length of less than 175 µm, the deformation is clearly still inadequate, since the reflection and transmission attenuation was found to be appreciably lower. With a compression length of more than 225 µm, the fibre was found to sag at this point, as a result of which the reflection and transmission characteristics were indefinite and therefore not satisfactorily reproducible. Within said compression length limits, such a deformation has been found to be very good and reproducible with adequate reliability. For this purpose, a section of such a fibre is laid in a standard type of splicing apparatus at the point where the two ends of the two fibres to be spliced are otherwise placed to make a splice, and then clamped in the same way in the micromanipulators belonging to such a splicing apparatus. At the point where welding is otherwise carried out, the deformation 3 is now produced by heating the fibre at this point for three seconds by means of a flame arc with a (splicing)current of 10 mA and simultaneously pushing the fibre together on either side of the deformation point 3 over a compression length Lₚ of approximately 200 micrometers. In this process, the compression length Lₚ is found to be very readily adjustable. After this treatment, the deformation point 3 approximately has the shape shown in said Figure 2. The cladding material is somewhat upset, but, as far as was found observable, the core material 4 is appreciably upset, having assumed a somewhat mushroom-like shape. Two phenomena appear to play a part in this connection. Firstly, the occurrence of a certain mixing of the cladding and core material of the fibre, as a result of which, at the point of the deformation, the refractive index acquires a value which is slightly different from the refractive index of the core material of the fibre (which is responsible for the actual guiding of light through the fibre). Secondly, as far as can be observed, the core material is upset in mushroom shape by the pushing together of the fibre, as a result of which the core diameter is appreciably larger locally than in the rest of the fibre. The result of all this is that a section of fibre which is treated as specified above not only has excellent non-reflection characteristics but, in addition, the transmission attenuation is very high as a consequence of the deformation. This means that a light signal propagating in the fibre in the direction of the deformation is therefore neither reflected nor transmitted, and that applies in each of the two directions.

In connection with the axial compression movement it may further be pointed out that the mutually advancing compression movement, in particular, has been found to be of fundamental importance for the reflection- and transmission-attenuating characteristics of the deformation. The restretching of the fibre at the deformation point after heating is not found per se to have the same effect as the pushing together. The desired result is, however, also obtained if the fibre is pushed together at the heated deformation point and is then stretched and pushed together again one or more times in succession.

Termination components provided with such deformations can be produced as separate components which are spliced to the fibre ends eligible for the purpose. However, it is also possible to arrange for such a termination component to form an integral part of (and to be produced from) the actual optical fibre end to be terminated, which then undergoes the treatment described above "on site".

## Claims

1. Method of producing a deformation in a section of an optical fibre (1,2) which deformation forms a low-reflection termination component comprising the following steps:
- clamping of the fibre section on either side of the point (3) at which said deformation is to be produced in first and second clamping means placed at a mutually adjustable distance;
- local, short-duration heating of said fibre section at said point (3) above the softening point of the fibre material,
- pushing together axially of the fibre on either side of the point of heating in the meantime over a suitably chosen compression length Lₚ by reducing the mutual distance between said first and second clamping means, which produces said deformation,
- allowing the deformation produced to cool,
characterised in that the fibre is a standard monomode optical fibre and in that the compression length Lₚ is between 175 µm and 225 µm, so as to produce a mushroom-like shaped deformation of the core material.

2. Method according to Claim 1, characterised in that the step of pushing together axially is carried out by repeatedly increasing and decreasing the mutual distance.

3. Low-reflection fibre termination component comprising an axial deformation showing a mushroom-like shape provided in the core of a standard monomode optical fibre at an end section of said fibre.

## Patentansprüche

1. Verfahren zum Herstellen einer Deformation in einem Abschnitt einer optischen Faser (1, 2), wobei diese Deformation eine reflexionsarme Abschlusskomponente bildet, umfassend folgende Schritte:
- Klemmen des Faserabschnitts auf beiden Seiten des Punktes (3), an dem diese Deformation hergestellt werden soll in ersten und zweiten Klemmitteln, welche in einem gegenseitig einstellbaren Abstand plaziert sind;
- lokales, kurzfristiges Erhitzen dieses Faserabschnitts an diesem Punkt (3) über den Erweichungspunkt des Fasermaterials;
- zwischenzeitiges axiales Zusammenstossen der Faser auf beiden Seiten des Erhitzungspunkts über eine geeignet gewählte Komprimierungslänge L_{P}, indem die gegenseitige Distanz zwischen diesen ersten und zweiten Klemmitteln verkürzt wird, wodurch die Deformation hergestellt wird,
- Abkühlenlassen der hergestellten Deformation,
**dadurch gekennzeichnet, dass** die Faser eine optische Standard-Monomodenfaser ist, und dass die Komprimierungslänge Lₚ zwischen 175 µm und 225 µm ist, so dass im Kernmaterial eine pilzartig geformte Deformation hergestellt wird.

2. Verfahren nach Anspruch 1, **dadurch gekennzeichnet, dass** der Verfahrensschritt des axialen Zusammenstossens durch wiederholtes Vergrössern und Verkleinern des gegenseitigen Abstandes durchgeführt wird.

3. Reflexionsarme Faserabschlusskomponente, umfassend eine axiale, eine pilzartige Form aufweisende Deformation, die im Kern einer optischen Standard-Monomodenfaser im Endabschnitt dieser Faser gebildet wird.

## Revendications

1. Procédé de production d'une déformation dans une section d'une fibre optique (1, 2) laquelle déformation forme un composant de terminaison à faible réflexion, comprenant les étapes :
de serrage de la fibre de chaque côté du point (3) auquel ladite déformation doit être produite dans des premier et second moyens de serrage placés mutuellement à une distance réglable ;
de chauffage local de courte durée de ladite section de fibre, audit point (3), au-dessus du point de ramollissement de la matière de fibre ;
de poussée avec réduction de longueur axialement de la fibre, de chaque côté du point de chauffage, sur une longueur de compression choisie Lₚ en réduisant la distance mutuelle entre lesdits premier et second moyens de serrage, ce qui produit ladite déformation ;
d'attente que la déformation produite se refroidisse ;
caractérisé en ce que la fibre est une fibre optique monomode standard, et en ce que la longueur de compression Lₚ se situe entre 175 µm et 225 µm de façon à produire une déformation en forme de champignon de la matière de coeur.

2. Procédé selon la revendication 1, caractérisé en ce que l'étape de poussée avec réduction de longueur axialement s'effectue en augmentant et en diminuant de façon répétée la distance mutuelle.

3. Composant de terminaison de fibre à faible réflexion, comprenant une déformation axiale, présentant une forme en champignon, appliquée au coeur d'une fibre optique monomode standard au droit d'une section d'extrémité de ladite fibre.
